# EUROPEAN PATENT APPLICATION

(11) **EP 4 575 960 A1**
(43) Date of publication of application: **25.06.2025**
(21) Application number: 23307255.2
(22) Date of filing: 19.12.2023
(51) Int. Cl.: G06Q 20/20, G06Q 20/32, G06Q 20/34, G06Q 20/40, G07F 7/08, G06K 19/07, G06K 19/073

(54) **METHOD FOR GETTING THE AGREEMENT OF THE USER TO PURSUE A CONTACTLESS FINANCIAL TRANSACTION**

(71) Applicant: THALES DIS FRANCE SAS, 92190 Meudon (FR)
(72) Inventor: SALLES, Jean-Luc, 13720 La Bouilladisse (FR); COOREMAN, Pascal, 13360 Roquevaire (FR); PALADJIAN, Pierre, 13190 Allauch (FR)
(74) Representative: Grevin, Emmanuel

(57) **Abstract**

The invention is a method for managing a contactless financial transaction involving a payment instrument (10) assigned to a user (50) and comprising both a sensor (52) and a contactless unit (16) able to communicate a in contactless mode with a payment terminal. During a first tap, the payment instrument gets a transaction data (61) from the payment terminal, and during a second tap after the first tap, the payment instrument sends to the payment terminal a decision data (71) reflecting an agreement or a refusal of the user to pursue the transaction. The payment instrument comprises a wireless unit (15) for communicating with a personal equipment (30). During the first tap, as soon as the payment instrument detects an electromagnetic field, the payment instrument immediately powers the wireless unit, then sends the transaction data to the personal equipment.

## Description

### (Field of the invention)

The present invention relates to methods for getting the agreement of the user to pursue a financial transaction involving a contactless payment instrument. It relates particularly to methods of controlling execution of a financial transaction in which a payment instrument and a banking terminal exchange data through a contactless communication channel.

### (Background of the invention)

Financial transactions or electronic funds transfers are done today through the interaction of a payment instrument with a connected payment terminal, and the exchange of a payload with a remote server. For example, the financial transaction may be a payment carried out via a Point-Of-Sale (POS) terminal or a cash withdrawal via an Automated Teller Machine (ATM). Such transactions are called in-person transactions (or proximity transactions or face-to-face transactions) because the cardholder is at the same location as the payment terminal.

Conventional banking terminals can communicate with a payment instrument through a contact communication protocol (e.g. payment instrument inserted in the banking terminal) or contactless communication protocol (e.g. payment instrument is placed in proximity to the banking terminal).

### (Summary of the Invention)

Many existing contactless payment instruments are physical smart cards devoid of a battery. Such contactless smart cards retrieve energy of the electromagnetic field produced by the contactless reader of the banking terminal to power the chip embedded in the smart card.

During a financial transaction involving both a banking terminal and a payment instrument communicating through a contactless communication protocol, the payment instrument may need to establish another communication channel with a third apparatus in order to provide some transaction data to the user. For instance, the payment instrument can send the money amount of a pending payment transaction to the user's smartphone that can display or vocalize the amount. Thus, the user can check that the amount declared in the pending transaction is the same as the price of the service or item being purchased. Since the user can thus detect an attempted fraud on the part of the seller, security is improved.

However, during a contactless transaction, the payment instrument must comply with strict time constraints for sending messages to the banking terminal. These time constraints depend on the specifications of the used contactless communication protocol.

Establishing a second communication channel with a third apparatus and sending transaction data to the third apparatus is time consuming.

There is a need to allow a contactless payment instrument to send transaction data to a third apparatus during a contactless financial transaction carried out with a banking terminal.

The invention aims at solving the above-mentioned technical problem.

An object of the present invention is a method for managing a contactless payment transaction between a payment terminal and a payment instrument which is assigned to a user. The payment instrument comprises a hardware sensor and a contactless unit able to communicate a in contactless mode with the payment terminal.

During a first tap between the payment instrument and the payment terminal, the payment instrument gets a transaction data from the payment terminal, and during a second tap subsequent to the first tap, the payment instrument sends to the payment terminal a decision data reflecting an agreement or a refusal of the user to pursue the contactless payment transaction.

The payment instrument comprises a wireless unit able to communicate through a wireless channel with a personal equipment, said wireless unit being different from the contactless unit.

During said first tap, as soon as the payment instrument detects an electromagnetic field generated by the payment terminal, the payment instrument immediately powers the wireless unit, then sends said transaction data to the personal equipment through the wireless channel.

Advantageously, the payment instrument may comprise a role parameter specifying a role of the sensor during the second tap. During the second tap, the payment instrument may detect whether the sensor is activated or not and may determine a status of the sensor. If the status complies with the role specified by the role parameter, the payment instrument may set the decision data with a value reflecting the agreement of the user to pursue the contactless payment transaction, otherwise, the payment instrument may set the decision data with a value reflecting the refusal of the user to pursue the contactless payment transaction.

Advantageously, the sensor may be a push button, a capacitive button, a mechanical sensor, an optical sensor, an electrical sensor or a biometric sensor configured to detect a presence of a finger of the user.

Advantageously, the payment instrument may comprise a role setting specifying a role of the sensor during the first tap. During said first tap, the payment instrument may detect whether the sensor is activated or not as soon as the payment instrument detects an electromagnetic field generated by the payment terminal and may determine a status of the sensor. If status complies with the role specified by the role setting, the payment instrument may immediately power the wireless unit, then may send said transaction data to the personal equipment through the wireless channel.

Advantageously, the payment instrument may be a smart card, a ring, a keychain, or a bracelet.

Advantageously, the wireless channel may be a Bluetooth Low Energy ^{®} broadcast or advertising.

Advantageously, the personal equipment may be a phone, a connected watch, a connected bracelet, or a Personal Digital Assistant (PDA) and is configured to provide said transaction data to the user by display or vocalization.

Another object of the present invention is a payment instrument assigned to a user. The payment instrument comprises a hardware sensor and a contactless unit able to communicate a in contactless mode with the payment terminal for handling a contactless payment transaction. During a first tap between the payment instrument and the payment terminal, the payment instrument is configured to get a transaction data from the payment terminal, and during a second tap subsequent to the first tap, the payment instrument is configured to send to the payment terminal a decision data reflecting an agreement of the user to pursue the contactless payment transaction. The payment instrument comprises a wireless unit able to communicate through a wireless channel with a personal equipment. The wireless unit is different from the contactless unit. During the first tap, as soon as the payment instrument detects an electromagnetic field generated by the payment terminal, the payment instrument is configured to immediately power the wireless unit, then to send said transaction data to the personal equipment through the wireless channel.

Advantageously, the payment instrument may comprise a role parameter specifying a role of the sensor during a second tap. During the second tap, the payment instrument may be configured to detect whether the sensor is activated or not and may determine a status of the sensor. If the status complies with the role specified by the role parameter, the payment instrument may be configured to set the decision data with a value reflecting the agreement of the user to pursue the contactless payment transaction. Otherwise, the payment instrument may be configured to set the decision data with a value reflecting the refusal of the user to pursue the contactless payment transaction.

Advantageously, the sensor may be a push button, a capacitive button, a mechanical sensor, an optical sensor, an electrical sensor or a biometric sensor configured to detect a presence of a finger of the user.

Advantageously, during said first tap, the payment instrument may be configured to detect whether the sensor is activated or not as soon as the payment instrument detects an electromagnetic field generated by the payment terminal. If the sensor is activated, the payment instrument may be configured to immediately power the wireless unit, then to send said transaction data to the personal equipment through the wireless channel.

Advantageously, the payment instrument may be a smart card, a ring, a keychain, or a bracelet.

Another object of the present invention is system comprising a payment instrument according to the invention and a personal device. The payment instrument comprises a first key and the personal device comprises a second key. Both said first and second keys have been defined during a pairing operation. The payment instrument and the personal device are configured to secure the wireless channel using both said first and second keys.

Advantageously, the personal device may be a phone, a tablet PC, a Personal Digital Assistant or a wearable device like a ring, a keychain, a bracelet, or a pair of glasses.

### (Brief description of the drawings)

Other characteristics and advantages of the present invention will emerge more clearly from reading the following description of a number of preferred embodiments of the invention with reference to the corresponding accompanying drawings in which:
- Fig. 1 shows an exemplary flow diagram for managing a contactless payment transaction according to an example of the invention; and
- Fig. 2 shows a diagram of architecture of a system for managing a contactless payment transaction according to an example of the invention.

### (Detailed description of the preferred embodiments)

The invention may apply to any type of contactless payment instrument usually associated to a user (also called cardholder). The payment instrument may be implemented in a wide variety of form factors such as physical smart card, smartwatch, or wearable device for instance.

Conventional contactless smart cards are designed to fully establish a contactless communication session with a contactless reader as soon as they detect the electromagnetic field generated by the contactless reader. Thus, as soon as they are powered by a electromagnetic field, conventional smart cards automatically perform with the contactless reader a handshake and anti-collision procedure in a time short enough to go unnoticed by the user, in order to offer the possibility of starting an application transaction (such as a payment transaction) as quickly as possible.

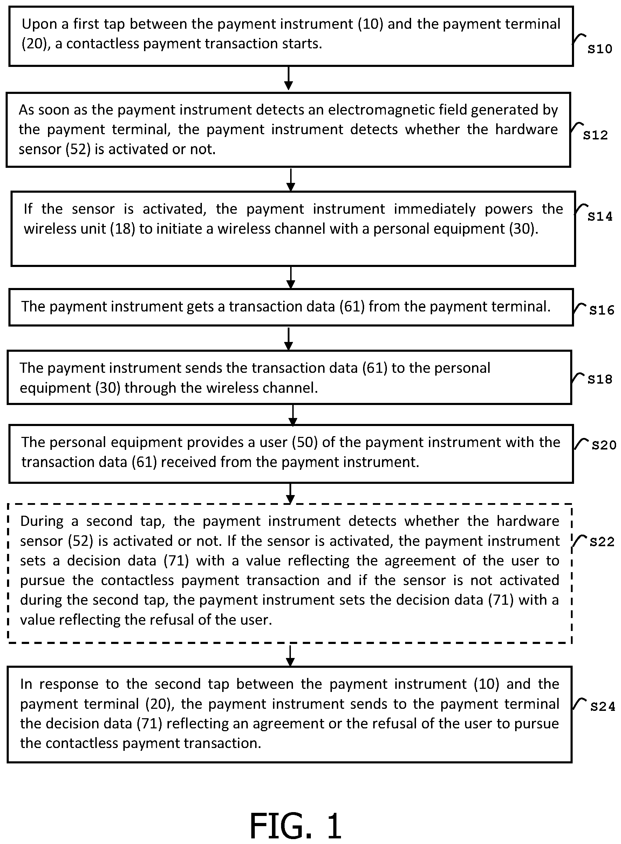

Figure 1 shows an exemplary flow diagram for managing a contactless payment transaction according to an example of the invention.

In this example, the payment instrument 10 is a physical banking card intended to be used by its associated genuine user 50 (i.e. bank customer or cardholder) for payment transactions or cash withdrawals.

The payment instrument 10 embeds a secure element comprising a hardware processing unit, a memory storing an operating system and a banking application designed to contribute to payment services. The payment instrument 10 can be a proximity card comprising a contactless unit able to communicate through a contactless protocol as defined by the ISO 14443 standard or Near Field Communications (NFC) standards for instance.

The payment instrument can be configured to communicate through a contact communication protocol in addition to the contactless communication protocol.

The payment instrument 10 comprises a hardware sensor 52 which can be a button or a fingerprint sensor for instance.

The payment instrument comprises a wireless unit able to communicate with a personal equipment 30 (or apparatus) through a contactless communication session relying on a contactless technology like Wi-Fi (as defined by ISO/CEI 8802-11 standard), Bluetooth Low Energy^{®} (BLE) or Ultra-Wideband (UWB) for instance.

The wireless unit is different from the contactless unit.

Preferably, the personal equipment 30 is a smartphone used by the user of the payment instrument and both the payment instrument and the personal equipment are able to communicate through Bluetooth Low Energy^{®} (BLE) protocol.

Let us assume that the user of the payment instrument wants to perform a face-to-face payment transaction with a payment terminal 20. In other words, the payment instrument and the payment terminal are placed close to each other. The user may tap the payment instrument on the payment terminal to allow the start of the payment transaction at step S10. A tap is to manually bring the payment instrument closed enough to the payment terminal so that the payment instrument can be powered by the electromagnetic field generated by the contactless reader of the payment terminal. The tap of step S10 is named the first tap.

In response to a first tap leading to the start of a financial transaction with the payment terminal 20, the payment instrument 10 is configured to receive a transaction data 61 prepared and sent by the payment terminal. The transaction data 61 comprises on or more applicative parameters intrinsic to the transaction, like the money amount, the date, or the currency for example.

In one embodiment, during this first tap, as soon as the payment instrument detects the electromagnetic field generated by the payment terminal, the payment instrument immediately powers the wireless unit to initiate a wireless channel with the personal equipment.

In another embodiment, the payment instrument can comprise a role setting 54 specifying a role of the sensor during the first tap. The role setting can specify that the sensor must be activated during the first tap to request powering the wireless unit as soon as possible. The payment instrument can determine the status of the sensor during the first tap. The status reflects the activation of the sensor during this first tap. As soon as the payment instrument detects the electromagnetic field generated by the payment terminal, the payment instrument detects whether the sensor is currently activated or not by the user during the first tap (Step S12). In other words, as soon as the secure element is powered by the energy retrieved from the electromagnetic field, the secure element interrogates the sensor (or the controller of the sensor depending on the internal architecture of the payment instrument) to find out if the sensor is currently activated by the user.

If the sensor status does not match the role setting 54, the payment instrument can behave as a conventional payment instrument that does not attempt to establish a wireless communication channel with the personal equipment.

If the status does comply with the role setting 54, the payment instrument immediately powers the wireless unit to initiate a wireless channel with the personal equipment (Step S14). The starting of the physical components of the wireless unit (including loading a firmware and launching it) can take a significant amount of time, for instance between 750 and 1250 milliseconds.

It is to be noted that in all embodiments the payment instrument powers the wireless unit before a contactless communication channel is fully established between the payment instrument and the payment terminal.

Once the contactless communication channel is fully established between the payment instrument and the payment terminal, the payment instrument receives transaction data 61 from the payment terminal (Step S16) . The transaction data are applicative parameters specific to the pending transaction, like the money amount, the type of transaction or an identifier of the merchant.

Then the payment instrument sends the received transaction data to the personal equipment through the wireless channel (Step S18).

Upon receipt of the transaction data, the personal equipment provides the user with the transaction data by display or audio (Step S20).

The user is now aware of the real value transaction parameters that are taken into account by the payment instrument to carry out the payment transaction. Thus, the user is now able to accept or deny pursuing the transaction.

During a second tap subsequent to the first tap, the payment instrument establishes a new contactless communication channel with the payment terminal, then sends to the payment terminal a decision data 71 reflecting an agreement or a refusal of the user to pursue the contactless payment transaction (Step 24).

In some embodiments, the payment instrument comprises a role parameter 53 specifying a role of the sensor during a second tap. The role parameter can specify that the sensor must be activated during the second tap to signify the user's agreement. Conversely, the role parameter can specify that the sensor should not be activated during the second tap to signify the user's agreement. The payment instrument can determine the status of the sensor during the second tap. The status reflects the activation of the sensor. Thus, the payment instrument can detect whether the hardware sensor is currently activated or not by the user (Step S22). The payment instrument can check if the determined status complies with the role specified by the role parameter 53. If the status complies with the role specified by the role parameter (e.g. the sensor is activated during the second tap and the role parameter specifying that the sensor must be activated during the second tap to validate the user's agreement), the payment instrument can set the decision data with a value reflecting the agreement of the user to pursue the contactless payment transaction. In case of discrepancy between the role parameter and the determined status, the payment instrument can set the decision data with a value reflecting the refusal of the user to pursue the contactless payment transaction. Thus, after getting the transaction data (I.e., at least one relevant transaction parameter) via the personal equipment, the user can decide to approve the pending transaction by activating the hardware sensor during the second tap.

In some embodiments, the secure element of the payment instrument can monitor (directly or via a sensor controller) the hardware sensor during the second tap to check whether the sensor is activated by the user during the second tap.

In some embodiments, the hardware sensor can be a push button, a capacitive button, a mechanical sensor, an optical sensor, or an electrical sensor.

In some embodiments, the hardware sensor can be a biometric sensor and the payment instrument can consider the sensor as activated either when the sensor detects the presence of a part of the user's body near its detection area or if the captured biometric data corresponds to a pre-recorded reference pattern. Preferably, the biometric sensor may be a fingerprint sensor.

In some embodiments, the payment instrument may check that the first tap and the second tap are performed with the same payment terminal and refuse to continue the transaction if this is not the case. For example, the initially received transaction data may comprise a first identifier of the payment terminal, the payment instrument may receive from the payment terminal a second identifier of the payment terminal in response to the second tap, and the payment instrument can refuse the transaction is the first and second identifiers are different.

In some embodiments, the payment instrument may check that the first tap and the second tap are done within a limited time and refuse to continue the transaction if this is not the case. For example, the initially received transaction data (first tap) can comprise a first timestamp. During the second tap, the payment instrument can receive from the payment terminal a second timestamp and the payment instrument can check the difference between the first and second timestamps is less than a predefined duration.

In some embodiments, the payment instrument may comprise a first key and the personal equipment may comprise a second key. Typically, both said first and second keys may have being defined and stored during a prior pairing operation between the payment instrument and the personal equipment. These keys may be symmetric keys or items of a public/private key pair. The payment instrument can encipher data sent to the personal equipment using the first key and the personal equipment can decipher the received data using the second key.

The personal equipment is not limited to a phone and may be a tablet PC, a Personal Digital Assistant (PDA) or a wearable device like a ring, a keychain, a bracelet or a pair of glasses for instance.

The payment instrument is not limited to a smart card and may be a payment ring, a payment keychain, or a payment bracelet for instance.

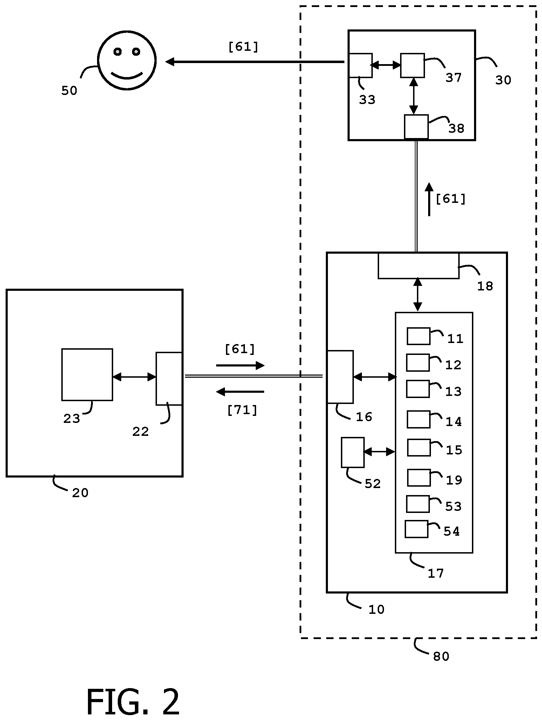

Figure 2 shows a diagram of architecture of a system for managing a contactless payment transaction according to an example of the invention.

In this example, the system 80 is a payment system comprising both a payment instrument 10 assigned to a user 50 and a personal device 30. The payment instrument 10 is a smart card having a secure element 17 including both a hardware processor and a non-volatile memory.

The smart card 10 comprises a physical communication interface 16 able to exchange data with a payment terminal 20 through a contactless channel.

The smart card 10 comprises another physical communication interface 18 able to exchange data with the personal device 30 through a wireless communication session relying on a wireless technology. Preferably, the smart card 10 is designed to communicate with the personal device 30 through a Bluetooth Low Energy^{®} (BLE) channel.

It should be noted that the physical communication interfaces 18 and 16 are separate.

The payment terminal 20 may be a conventional Point-Of-Sale (POS) terminal or an Automated Teller Machine (ATM). It comprises a hardware processor (not shown), a banking application 23 able to manage financial transactions, and a physical communication interface 22 adapted to exchange data with the payment instrument 10 in contactless mode. For instance, the communication interface 22 may be adapted to exchange data through a communication session compliant with ISO/IEC-14443 standard or Near Field Communications (NFC) specifications.

The payment instrument comprises a hardware sensor 52 and the secure element 17 comprise a first set 11 of program instructions designed to monitor the hardware sensor 52 during a tap.

The hardware sensor 52 can be a push button, a capacitive button, a mechanical sensor, an optical sensor or an electrical sensor. In some embodiments, the hardware sensor 52 can be a biometric sensor like a fingerprint scanner.

In some embodiments, the secure element 17 comprises a second set 12 and a third set 13 of program instructions. The second set of program instructions is designed to detect whether the hardware sensor is currently activated or not during said first tap as soon as the payment instrument detects an electromagnetic field generated by the payment terminal. The third set 13 of program instructions is designed to immediately power the wireless unit 18 if the hardware sensor is activated during the first tap.

In some embodiments, the secure element 17 comprises a third set 13 of program instructions designed to immediately power the wireless unit 18 during the first tap whether the sensor is activated or not.

The secure element 17 comprises a fourth set 14 of program instructions (e.g. a banking application) designed to get transaction data 61 from the payment terminal 20 and to send said transaction data 61 to the personal equipment 30 through the wireless channel which is established between the payment instrument and the personal equipment.

Preferably, the wireless unit 18 is compliant with Bluetooth Low Energy^{®} (BLE). In some embodiments, the fourth set 14 of program instructions is adapted to send the transaction data 61 using the advertising mode or the broadcast mode of BLE. In some embodiments, the fourth set 14 of program instructions is adapted to fully establish a bidirectional communication channel with the personal device 30 then to send the transaction data 61 through the bidirectional communication channel.

It should be noted that according to the invention, the sending of application data linked to the pending financial transaction is only necessary in one direction, namely from the payment instrument 10 to the personal device 30.

The fourth set 14 of program instructions is also designed to record in a non-volatile memory of the secure element an historical data 19 including one or more parameters of the transaction. Such transaction parameters may be received along with the transaction data 61. The transaction parameters can be one or more of the following items: a money amount, a type of transaction, a date, a time, an identifier of the payment terminal 20, an identifier of the merchant to whom the payment terminal 20 is assigned, or a currency for instance. The stored historical data 19 can include an indicator indicating that a financial transaction is in progress.

The secure element 17 is configured to execute (by its hardware processor) both said first, second and third sets of program instructions as soon as the payment instrument is powered by electromagnetic field of the payment terminal.

The secure element 17 can be configured to execute the fourth set 14 of program instructions after execution of said first, second and third sets of program instructions.

The secure element 17 comprises a fifth set 15 of program instructions designed to detect that a second tap occurred for the same transaction as the first tap. The fifth set 15 of program instructions can be designed to rely on both the stored historical data 19 and new application data received from the payment terminal 20 to check whether the two taps occurred for the same financial transaction.

It should be noted that both first and second taps belong to (are part of) the same financial transaction from the payment instrument's point of view. Such financial transaction is known as a double tap transaction.

The fifth set 15 of program instructions is also designed to generate a decision data 71 with a value reflecting either the authorization or the refusal to pursue the contactless payment transaction. The fifth set 15 of program instructions is designed to send the generated decision data 71 to the payment terminal 20 via the contactless unit 16.

In some embodiments, the payment instrument can comprise a role parameter 53 specifying a role of the sensor during a second tap. The role parameter can specify that the sensor must be activated during the second tap to validate agreement of the user to pursue the transaction. Conversely, the role parameter can specify that the sensor should not be activated during the second tap to signify the user's agreement. The fifth set 15 of program instructions can be also designed to determine the status of the sensor during the second tap. The status reflects the activation of the sensor. Thus, the payment instrument can detect whether the hardware sensor is currently activated or not by the user. The fifth set 15 of program instructions can be also designed to check if the determined status complies with the role specified by the role parameter 53. If the status complies with the role specified by the role parameter (e.g. the sensor is not activated during the second tap and the role parameter specifying that the sensor should not be activated during the second tap to validate the user's agreement), the payment instrument can set the decision data 71 with a value reflecting the agreement of the user to pursue the contactless payment transaction. In case of discrepancy between the role parameter and the determined status, the fifth set 15 of program instructions can be also designed to set the decision data with a value reflecting the refusal of the user to pursue the contactless payment transaction. Thus, after getting the transaction data (I.e., at least one relevant transaction parameter) via the personal equipment, the user can decide to approve the pending transaction by activating or not the hardware sensor during the second tap.

In some embodiments, the fifth set 15 of program instructions can be adapted to reset or delete at least a part of the historical data 19 after the decision data 71 is sent to the payment terminal 20.

The hardware sensor can be a conventional push button, a capacitive button, a mechanical sensor, an optical sensor, an electrical sensor, or a biometric sensor configured to detect a presence of a finger of the user.

The personal device 30 can be a phone, a tablet PC, a Personal Digital Assistant (PDA) or a wearable device like a ring, a keychain, a bracelet, or a pair of glasses.

The personal device 30 has a user interface 33 designed to provide the user 50 with information by audio or display. The personal device 30 has a communication unit 38 able to communicate with the wireless unit 18 of the payment instrument 10. Preferably, the communication unit 38 is compliant with BLE^{®}.

The personal device 30 comprises a companion application 37 able to get transaction data 61 sent by the payment instrument via the wireless unit 18 and the communication unit 38 and to present the transaction data 61 to the user through the user interface 33.

Preferably, the banking application 37 is implemented as a set of software instructions executed by a hardware processor embedded in the personal device 30.

In some embodiments, the companion application 37 is designed to retrieve the transaction data 61 by deciphering a received message using a key that has been stored in the personal device during a previous pairing operation. In such embodiments, the payment instrument uses a corresponding key to encipher data sent to the personal device 30. The corresponding key has been stored in non-volatile memory of the payment instrument during the previous pairing operation.

The invention is not limited to the described embodiments or examples. In particular, the described examples and embodiments may be combined.

The invention is not limited to Banking smart cards and applies to any payment instruments able to participate to a financial transaction.

Thanks to some embodiments of the invention, during a proximity payment transaction performed with a payment terminal, the cardholder of the payment instrument can check some transaction parameters through the user interface of their personal device before accepting or rejecting the pending payment transaction. Thus, a hacked or fake payment terminal cannot cheat the user by displaying an amount different from the transaction amount sent to the payment instrument.

Thanks to some embodiments of the invention, the duration of the whole payment transaction remains reasonable for the user and easy to perform.

Some embodiments of the invention are well-suited to allow visually impaired people to securely perform a payment transaction in which at least one essential transaction parameter is vocalized by their personal apparatus.

## Claims

1. A method for managing a contactless payment transaction between a payment terminal (20) and a payment instrument (10) assigned to a user (50), the payment instrument comprising a hardware sensor (52) and a contactless unit (16) able to communicate a in contactless mode with the payment terminal,
during a first tap between the payment instrument and the payment terminal, the payment instrument gets a transaction data (61) from the payment terminal, and during a second tap subsequent to the first tap, the payment instrument sends to the payment terminal a decision data (71) reflecting an agreement or a refusal of the user to pursue the contactless payment transaction,
wherein, the payment instrument comprises a wireless unit (15) able to communicate through a wireless channel with a personal equipment (30), said wireless unit being different from the contactless unit,
wherein during said first tap, as soon as the payment instrument detects an electromagnetic field generated by the payment terminal, the payment instrument immediately powers the wireless unit (15), then sends said transaction data (61) to the personal equipment (30) through the wireless channel.

2. The method according to claim 1, wherein the payment instrument comprises a role parameter (53) specifying a role of the sensor during the second tap, wherein during the second tap, the payment instrument detects whether the sensor is activated or not and determines a status of the sensor, and
wherein, if the status complies with the role specified by the role parameter, the payment instrument sets the decision data (71) with a value reflecting the agreement of the user to pursue the contactless payment transaction, otherwise, the payment instrument sets the decision data (71) with a value reflecting the refusal of the user to pursue the contactless payment transaction.

3. The method according to claim 1, wherein the sensor is a push button, a capacitive button, a mechanical sensor, an optical sensor, an electrical sensor or a biometric sensor configured to detect a presence of a finger of the user.

4. The method according to claim 1, wherein the payment instrument comprises a role setting (54) specifying a role of the sensor during the first tap, wherein during said first tap, the payment instrument detects whether the sensor is activated or not as soon as the payment instrument detects an electromagnetic field generated by the payment terminal and determines a status of the sensor, and
wherein, if status complies with the role specified by the role setting, the payment instrument immediately powers the wireless unit (15), then sends said transaction data (61) to the personal equipment (30) through the wireless channel.

5. The method according to claim 1, wherein the payment instrument is a smart card, a ring, a keychain, or a bracelet.

6. The method according to claim 1, wherein the wireless channel is a Bluetooth Low Energy ^{®} broadcast.

7. The method according to claim 1, wherein the personal equipment (30) is a phone, a connected watch, a connected bracelet or a PDA and is configured to provide said transaction data to the user by display or vocalization.

8. A payment instrument (10) assigned to a user (50), the payment instrument comprising a hardware sensor (52) and a contactless unit (16) able to communicate a in contactless mode with the payment terminal for handling a contactless payment transaction,
during a first tap between the payment instrument and the payment terminal, the payment instrument is configured to get a transaction data (61) from the payment terminal, and during a second tap subsequent to the first tap, the payment instrument is configured to send to the payment terminal a decision data (71) reflecting an agreement of the user to pursue the contactless payment transaction,
wherein, the payment instrument comprises a wireless unit (15) able to communicate through a wireless channel with a personal equipment (30), said wireless unit being different from the contactless unit,
wherein during said first tap, as soon as the payment instrument detects an electromagnetic field generated by the payment terminal, the payment instrument is configured to immediately power the wireless unit (15), then to send said transaction data (61) to the personal equipment (30) through the wireless channel.

9. The payment instrument according to claim 8, wherein the payment instrument comprises a role parameter (53) specifying a role of the sensor during a second tap, wherein during the second tap, the payment instrument is configured to detect whether the sensor is activated or not and determines a status of the sensor, and
wherein, if the status complies with the role specified by the role parameter, the payment instrument is configured to set the decision data (71) with a value reflecting the agreement of the user to pursue the contactless payment transaction and otherwise, the payment instrument is configured to set the decision data with a value reflecting the refusal of the user to pursue the contactless payment transaction.

10. The payment instrument according to claim 8, wherein the sensor is a push button, a capacitive button, a mechanical sensor, an optical sensor, an electrical sensor or a biometric sensor configured to detect a presence of a finger of the user.

11. The payment instrument according to claim 8, wherein during said first tap, the payment instrument is configured to detect whether the sensor is activated or not as soon as the payment instrument detects an electromagnetic field generated by the payment terminal, and
wherein, if the sensor is activated, the payment instrument is configured to immediately power the wireless unit (15), then to send said transaction data (61) to the personal equipment (30) through the wireless channel.

12. The payment instrument according to claim 8, wherein the payment instrument is a smart card, a ring, a keychain, or a bracelet.

13. The payment instrument according to claim 8, wherein the wireless channel is a Bluetooth Low Energy ^{®} broadcast.

14. A system (80) comprising the payment instrument according to claim 8 and a personal device (30),
wherein the payment instrument comprises a first key (13) and the personal device comprises a second key (33), both said first and second keys having been defined during a pairing operation;
wherein the payment instrument and the personal device are configured to secure the wireless channel using both said first and second keys.

15. The system according to claim 14, wherein the personal device is a phone, a tablet PC, a Personal Digital Assistant or a wearable device like a ring, a keychain, a bracelet or a pair of glasses.
